# EUROPEAN PATENT SPECIFICATION

(11) **EP 4 433 633 B1**
(45) Date of publication and mention of the grant of the patent: **15.04.2026**
(21) Application number: 22802935.1
(22) Date of filing: 13.10.2022
(51) Int. Cl.: D03D 1/02, B60R 21/235, D03D 11/02, B60R 21/2338

(54) **AN AIRBAG**
AIRBAG
COUSSIN GONFLABLE DE SÉCURITÉ

(30) Priority: 15.11.2021 DE 102021129766
(43) Date of publication of application: 25.09.2024
(73) Proprietor: Autoliv Development AB, 447 83 Vårgårda (SE)
(72) Inventor: THORPE, Ryan, Congleton Cheshire CW12 1LJ (GB); DEAN, Helen, Congleton Cheshire CW12 1LJ (GB); WOOTTON, Gary, Congleton Cheshire CW12 1L (GB); DOLMAN, Jez, Congleton Cheshire CW12 1L (GB); HOLLIES, Andy, Congleton Cheshire CW12 1LJ (GB); GOWDA, Shashank, Bengaluru, Karnataka (IN); MAJEWSKA, Donata, 55-200 Olawa (PL); KEDZIERSKI, Mateusz, 55-200 Olawa (PL); BALAGUE, Henrik, 44783 Vargarda (SE)
(74) Representative: Mewburn Ellis LLP
(86) International application number: PCT/EP2022/078477
(87) International publication number: WO 2023/083551

(56) References cited:
- DE-B3- 102020 108 396
- JP-A- 2004 268 880
- US-A- 5 651 395
- US-A1- 2007 200 329

## Description

### Field of the Invention

The present invention relates to an airbag configured to be inflated by a source of inflating gas, and more particularly relates to an inflatable airbag having an integral tether arrangement to induce curvature to the airbag upon inflation.

### Background

It is well known and now very common practice to provide an airbag in a motor vehicle such that in the event of an accident involving the motor vehicle, the airbag is inflated to adopt an inflated position between the head or body of a vehicle occupant and the structure of the motor vehicle in order to provide protection to the occupant by reducing the likelihood of injurious impact between the occupant's head or body and the structure of the vehicle. Such airbags are for example known from US 2007/200329 A1 and DE 10 2020 108396 B3. US 2007/200329 A1 in particular discloses an airbag configured to be inflated by a source of gas, the airbag being formed from first and second layers of fabric arranged in superimposition to define an inflatable chamber between the layers for the receipt of inflating gas; each layer of fabric having a structure comprising at least one yarn, and the two layers being interconnected by a plurality of tether yarns extending between the layers within the inflatable chamber, wherein at least some of said tether yarns are implicated in the structure of said layers within a first group of connection regions comprising a plurality of first connection regions within which the tether yarns are implicated in the structure of the first layer, and a plurality of second connection regions within which the tether yarns are implicated in the structure of the second layer; wherein within the first group of connection regions: i) each said first connection region is wider in a length-direction of the tether yarns than each said second connection region, and ii) said second connection regions are offset relative to said first connection regions such that said second connection regions do not oppose any said first connection regions across the inflatable chamber; and wherein said first and second connection regions within the first group are elongate and extend generally parallel to one another and across respective layers of the airbag; the tether yarns serving to induce a curvature via the first group of connection regions, when the inflatable chamber is inflated. It is also now becoming common to provide airbags on the exterior of motor vehicles, in order that the airbags may inflate in the event of a detected or predicted collision with a pedestrian or other vulnerable road user such as a cyclist, thereby offering similar protection to the vulnerable road user by cushioning their impact with the motor vehicle during an accident. Furthermore, there have also been several proposals to provide airbags as part of personal protection arrangements configured to be worn by people undertaking high risk tasks. For example, personal fall protection systems may include one or more airbags configured to inflate upon detection of the wearer being likely to fall, and to thereby adopt an inflated position against part of the wearer's body, such as the hip area, in order to provide protection against injury arising from the fall.

To ensure the provision of effective protection, it is often desirable to provide an airbag that is configured to adopt a somewhat curved or bent shape upon inflation. An example here is a side impact airbag provided within the cabin of a motor vehicle and configured to adopt an inflated position between an occupant of the vehicle and the side structure of the vehicle to provide protection to the occupant in the event of a side impact. In the case of such side impact airbags, it may be advantageous for the airbag to adopt an inflated shape which is somewhat concave towards the occupant, in order to 'catch' the occupant's head and/or torso, thereby reducing the likelihood of the occupant's head or torso sliding forwardly or rearwardly across the airbag under the force of inertia, and out of protective contact with the airbag. So-called knee airbags are another example of airbags where a curved inflated shape can be advantageous. Knee airbags are typically installed at a low position in the footwell of a motor vehicle (for example on the underside of a vehicle's dashboard), and may be configured to curve upwards in their inflated configuration to extend from their installation position and around the dashboard in order to provide sufficient protection to an occupant's knees.

So-called inflatable curtain (IC) airbags may also be advantageously configured to adopt a somewhat curved shape upon inflation in order to improve their protective performance. An inflatable curtain airbag is provided within a motor vehicle in a position such that in the event of an accident involving a side impact or a roll-over incident, the airbag is inflated so as to become disposed between the side of the vehicle and the head of a vehicle occupant in order to protect against the occupant's head coming into contact with or passing through a window in the side of the vehicle. Typically, inflatable curtain airbags are configured to extend across the entire side window region of a motor vehicle, and it has been found that a degree of curvature induced into the inflated shape of such an airbag can be effective in increasing the airbag's area of coverage, for example in the A-pillar region of the motor vehicle where the side window meets the rearwardly sloping frame of the front windscreen.

Personal fall protection arrangements represent another example of airbags whose protective performance can be improved by having a somewhat curved inflated shape. For example, a hip-protector airbag should be configured to wrap itself around the user as it deploys, rather than deploy in a direction away from the user, in order to offer optimal protection. Furthermore, hip-protector airbags represent an example of airbag whose performance can be further optimised by having a configuration which induces two types of curvature into its inflated configuration - namely a first curvature around the user's vertical axis (so that the airbag extends around the sides of the wearer's hips upon deployment), and a second curvature around the user's frontal axis (so that the airbag extends underneath the user's hips and buttocks, particularly when in a seated position).

As the skilled person will readily understand, there are many other examples of airbags for which a two-way bend or two types of curvature are desirable upon deployment - for example personal fall protection garments in the form of vests, trousers, helmets, shorts, trousers of the like.

It is also envisaged that a convenient way to achieve a curved shape upon inflation of an airbag could facilitate the provision of airbags for all manner of different uses. For example, an airbag configured to bend in a plurality of different regions could configured to achieve the shape of a flight of stairs upon inflation.

The present invention has been devised in light of the above considerations.

### Summary of the Invention

According to the invention there is provided an airbag configured to be inflated by a source of gas, the airbag being formed from first and second layers of fabric arranged in superimposition to define an inflatable chamber between the layers for the receipt of inflating gas; each layer of fabric having a structure comprising at least one yarn, and the two layers being interconnected by a plurality of tether yarns extending between the layers within the inflatable chamber. At least some of the tether yarns are implicated in the structure of said layers at a first group of connection regions comprising a plurality of first connection regions within which the tether yarns are implicated in the structure of the first layer, and a plurality of second connection regions within which the tether yarns are implicated in the structure of the second layer. At least some of the tether yarns are implicated in the structure of said layers at a second group of connection regions comprising a plurality of first connection regions within which the tether yarns are implicated in the structure of the first layer, and a plurality of second connection regions within which the tether yarns are implicated in the structure of the second layer. Within each said group of connection regions, each said first connection region is wider in a length-direction of the tether yarns than each said second connection region. The second connection regions are offset relative to the first connection regions such that the second connection regions do not oppose any first connection regions across the inflatable chamber. The first and second connection regions within each group are elongate and extend generally parallel to one another and across respective layers of the airbag, the connection regions of the first group being non-parallel to the connection regions of the second group. The tether yarns serve to induce a first curvature to the airbag via the first group of connection regions, and serve to induce a second curvature to the airbag via the second group of connection regions, when the inflatable chamber is inflated.

The fabric layers may be woven, in which case the structure of each fabric layer will be a weave comprising a plurality of parallel warp yarns, and a plurality of parallel weft yarns. For example, the fabric layers may have a plain weave, but could alternatively have other weave configurations.

Alternatively, it is envisaged that the fabric layers could be knitted, in which case the structure of the fabric layer will be a knit comprising at least one yarn forming interlocking loops. For example, the knit of fabric layers may be a so-called weft knit comprising a single yarn. Alternatively, the knit of the fabric layers may be a so-called warp knit comprising loops formed from separate yarns.

Advantageously, each connection region extends along a respective axis of extension; and at least some of the connection regions of one of said groups extend across the axes of extension along which at least some of the connection regions of the other group extend.

The two groups of connection regions may be immediately adjacent one another. For example, the first group of connection regions may be provided immediately adjacent the second group of connection regions.

Optionally, the connection regions of the first group extend at an oblique angle to the extension of the connection regions of the second group.

Where the fabric layers of woven, the connection regions of the first and second groups may extend at oblique angles to both the warp yarns and the weft yarns of the two layers of fabric.

Conveniently, at least one of said groups of connection regions comprises: a first set of said first and second connection regions, and a second set of first and second connection regions; each first connection region of said first set extending collinearly relative to a respective first connection region of said second set, and each second connection region of the first set extending collinearly relative to a respective second connection of the second set; and wherein the first and second sets of connection regions are separated from one another by a flexure seam interconnecting the first and second layers of fabric. The flexure seam may thus be configured to propagate curvature of the airbag induced by the group of connection regions within which the flexure seam is provided.

Optionally, said flexure seam is substantially linear and extends generally orthogonal to the extension of said connection regions of the first and second sets of connection regions within the group.

Where the fabric layers are woven, said tether yarns may be arranged to extend generally parallel to one another and generally parallel to said weft yarns of the fabric layers. Alternatively, it is envisaged that the tether yarns may extend generally parallel to said warp yarns.

Advantageously, within each said group of connection regions: said first connection regions are spaced-apart from one another across a portion of said first layer; and said second connection regions are spaced apart from one another across an opposing portion of said second layer.

Advantageously, within each said group of connection regions: no tether yarns extend between any of said second connection regions without being implicated in the structure of the first layer between said second connection regions.

Optionally, within at least one said group of connection regions: at least one said first connection region comprises a plurality of spaced-apart connection sub-regions within which said tether yarns are implicated in the structure of said first layer, and wherein said tether yarns extend between said connection sub-regions without being implicated in the structure of either the first layer or the second layer between said connection sub-regions.

Optionally, each said layer of fabric is woven and has a weave comprising a plurality of generally parallel woven yarns.

Tether yarns may be interwoven with yarns of the first layer within each said first connection region, and tether yarns may be interwoven with yarns of the second layer within each said second connection region.

Conveniently, tether yarns are interwoven with the yarns of the first layer only within said connection sub-regions and are interwoven with yarns of the second layer only within said second connection regions.

Where the fabric layers are woven, the connection regions of the first and second groups may extend at oblique angles to both the warp yarns and the weft yarns of the two layers of fabric.

Optionally, the airbag of the first aspect is a one-piece woven airbag comprising at least one integrally woven seam defined by a region in which yarns of the weave of one said layer are interwoven with yarns of the weave of the other said layer, and wherein said tether yarns are integrally woven into the weave of said layers within said connection regions. Conveniently, said at least one integrally woven seam may include the flexure seam mentioned hereinbefore.

According to a second aspect, which is not according to the present invention, there is provided an airbag configured to be inflated by a source of gas, the airbag being formed from first and second layers of fabric arranged in superimposition to define an inflatable chamber between the layers for the receipt of inflating gas; each layer of fabric having a structure comprising at least one yarn, and the two layers being interconnected by at least one tether yarn extending between the layers within the inflatable chamber. The or each tether yarn is implicated in the structure of the first layer at a plurality of first connection regions, and is implicated in the structure of the second layer at a plurality of second connection regions. Each said first connection region is wider in a length-direction of the or each tether yarn than each said second connection region, and said second connection regions are offset relative to said first connection regions such that said second connection regions do not oppose any said first connection regions across the inflatable chamber. The at least one tether yarn serves to induce curvature to the airbag when its inflatable chamber is inflated.

Similarly to the first aspect, the airbag of the second aspect may either be woven or knitted. Conveniently, said first connection regions are spaced apart from one another across at least a portion of said first layer, and said second connection regions are spaced apart from one another across at least an opposing portion of said second layer.

The position on said second fabric layer of at least one said second connection region may be interposed between the positions on said first fabric layer of two adjacent first connection regions.

The or each tether yarn may be arranged so as not to extend between any of said second connection regions without being implicated in the structure of the first layer between said second connection regions.

Advantageously, at least one said first connection region may comprise a plurality of spaced-apart connection sub-regions within which the or each tether yarn is implicated in the structure of said first layer, and the or each tether yarn may extend between said connection sub-regions without being implicated in the structure of either the first layer or the second layer between said connection sub-regions.

Optionally, each said layer of fabric is woven and has a weave comprising a plurality of generally parallel woven yarns.

Advantageously, the or each tether yarn is interwoven with yarns of the first layer within each said first connection region, and is interwoven with yarns of the second layer within each said second connection region.

Conveniently, the or each tether yarn is interwoven with yarns of either said layer only within said connection regions.

The or each tether yarn may be interwoven with yarns of the first layer only within said connection sub-regions and may be interwoven with yarns of the second layer only within said second connection regions.

The airbag may comprise a plurality of said tether yarns, the tether yarns extending generally parallel to one another and generally orthogonal to said generally parallel woven yarns of the weave of the first and second layers.

Optionally, said aforementioned generally parallel woven yarns of each layer of fabric are warp yarns, each layer of fabric further comprising a plurality of generally parallel weft yarns, and wherein the or each tether yarn extends generally parallel to said weft yarns.

Said aforementioned generally parallel woven yarns of each layer of fabric may be warp yarns, and each layer of fabric may further comprise a plurality of generally parallel weft yarns. The inflatable airbag may comprise a plurality of said tether yarns, with the tether yarns extending generally parallel to said weft yarns of the fabric layers.

Alternatively, it is envisaged that the or each tether yarn may extend generally parallel to said warp yarns.

There may be provided a significant number of tether yarns arranged in a side-by-side relationship to one another, for example with the tether yarns being distributed amongst the weft yarns of the two fabric layers so as to extend generally parallel to the weft yarns and perpendicular to the warp yarns, or *vice-versa,* and thereby collectively defining a tether having a width which extends some distance along the warp-direction (or the weft direction) of the fabric. Indeed, in some embodiments it is envisaged that the tether yarns may be provided within a third layer of fabric woven from a third set of warp yarns and the tether yarns, wherein the tether yarns define weft yarns of the third layer of fabric. Alternatively, the tether yarns may be provided within a third layer of fabric woven in a manner such that the tether yarns define warp yarns of the third layer.

Optionally, each said connection region is generally elongate, and said first and second connection regions extend generally parallel to one another and across respective fabric layers of the airbag so as to traverse a plurality weft yarns (or warp yarns) of the fabric layers.

Also optionally, the first and second connection regions may traverse said plurality of weft yarns at an oblique angle to said weft yarns, and may traverse said plurality of warp yarns at an oblique angle to said warp yarns.

The airbag of the second aspect is optionally a one-piece woven airbag comprising at least one integrally woven seam defined by a region in which yarns of the weave of one said layer are interwoven with yarns of the weave of the other said layer. The or each tether yarn may be integrally woven into the weave of said layers within said connection regions.

Whilst embodiments are described herein and illustrated in the accompanying drawings in which tether yarns are implicated in the weave of the constituent fabric layers by passing between or partly around (e.g. by being interwoven with) warp yarns of a woven airbag , it is proposed that in other embodiments the tether yarns may instead be arranged to pass between or at least partly around (e.g. by being interwoven with) weft yarns of the airbag. In such embodiments it will therefore be appreciated that the tether yarns are distributed amongst the warp yarns of the constituent layers of fabric rather than amongst the weft yarns as described with reference to specific embodiments disclosed herein.

The fabric layers of the airbag, and optionally also an internal tether defined by the tether yarns, may be provided with a surface coating or film. In the case of the airbag's main constituent layers of fabric, the coating or film may be applied either on their inside surface, their outside surface, or both. For example, it is proposed that a heat resistant coating or film may be applied to the fabric layers and/or the tether, in order to protect the fabric and yarns from high temperatures which may arise during inflation due to the high temperature of the inflating gas produced by an inflator. Alternatively, or additionally, the coating or film may provide a sealing function, effective to prevent or reduce the leakage of inflating gas between the yarns of the airbag during inflation. This may be particularly advantageous around the connection regions of the two fabric layers, where the tether yarns are implicated in the structure (e.g. the weave) of the fabric layers, because there may be a tendency for the tether yarns to pull warp or weft yarns of the fabric layers apart from one another as the tether yarns are subjected to tension during inflation of the airbag, thereby opening up small gaps through which inflation gas may otherwise leak.

The invention includes the combination of the aspects and preferred features described except where such a combination is clearly impermissible or expressly avoided.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein, within the scope of the independent claim.

### Summary of the Figures

So that the invention may be more readily understood, and so that further features thereof may be appreciated, embodiments of the invention will now be described by way of example with reference to the accompanying drawings in which:
Figure 1 is a perspective view of a section through part of an airbag, showing an internal tether arrangement;
Figure 2 is diagrammatic sectional view of a conventional internal tether arrangement provided within an airbag;
Figure 3 is a diagrammatic sectional view of another conventional internal tether arrangement within an airbag;
Figure 4 is a diagrammatic section view of an internal tether arrangement provided within an airbag in accordance with an aspect of the present invention;
Figure 5 is a diagrammatic sectional view showing one way in which a tether yarn may be implicated in the weave of a layer of the airbag;
Figure 6 is a diagrammatic sectional view showing another way in which a tether yarn may be implicated in the weave of a layer of the airbag;
Figure 7 is a diagrammatic view of an airbag showing a plurality of connection regions where tether yarns are implicated in the weave of a layer of the airbag;
Figure 8 is a diagrammatic sectional view similar to that of Figure 4, but which shows the tether arrangement inducing curvature to the airbag upon inflation;
Figure 9 is a cross-sectional view through an inflated airbag, illustrating curvature induced to the airbag upon inflation;
Figure 10 is a perspective view of an uninflated airbag in accordance with an aspect of the invention;
Figure 11 is another perspective view of the airbag illustrated in Figure 10, but which shows the airbag in an inflated, and curved, configuration;
Figure 12 is a schematic illustration, from the front, of a pair of specific airbags inflated around the hip region of a person to provide protection to the hip region of the person;
Figure 13 is a schematic illustration, from below, of the pair of airbags of Figure 12 inflated around the person's hip region;
Figure 14 is a schematic illustration similar to that of Figure 12, but which shows a pair of specific airbags of alternative configuration to those of Figures 12 & 13;
Figure 15 is a schematic illustration, from below, of the pair of airbags of Figure 14 inflated around the person's hip region;
Figure 16 is a schematic plan view of a one-piece woven web comprising opposing layers of woven fabric, within which are formed a pair of airbags in accordance with an aspect of the invention;
Figure 17 is a plan view from above showing a pair of airbags obtained from the web illustrated in Figure 16;
Figure 18 is a schematic plan view from above showing a single one of the airbags of Figure 17;
Figure 19 is a is a schematic illustration, from the front, which is similar to Figures 12 and 14, but which instead shows the airbags of Figure 17 inflated around the hip region of a person to provide protection to the hip region of the person; and
Figure 20 is a is a schematic illustration, from the below, which is similar to Figures 13 and 15, but which instead shows the airbags of Figure 17 inflated around the hip region of a person to provide protection to the hip region of the person.

### Detailed Description of the Invention

Aspects and embodiments of the present invention will now be discussed with reference to the accompanying figures. Further aspects and embodiments will be apparent to those skilled in the art.

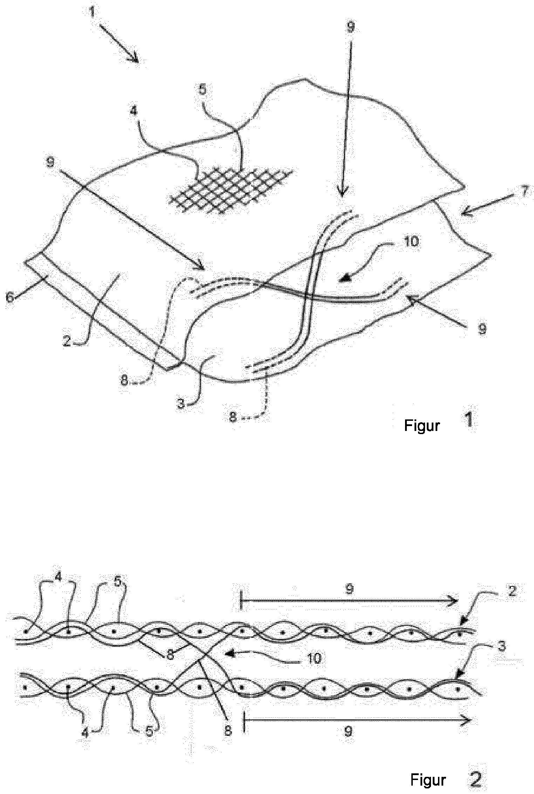

Turning initially to consider Figure 1, there is illustrated a region of an airbag 1 which is configured to be inflated by a source of gas. 'As will be appreciated, and as is conventional, the airbag 1 is formed from first (upper) and second (lower) layers of fabric 2, 3, each of which is woven from warp yarns 4 and weft yarns 5 and thus has a structure in the form of a weave. It is to be appreciated, however, that the invention may alternatively be applied to an airbag in which the layers of fabric are knitted layers, in which case the layers will have a structure in the form of a knit comprising at least one yarn.

The two layers of fabric 2, 3 are arranged in superimposition, and are interconnected around their peripheral edges by a peripheral seam 6 (only part of which is shown in Figure 1), thereby defining an inflatable chamber 7 between the layers 2, 3 for the receipt of inflating gas from an inflator (not shown) such as a gas generator, in a known manner. The airbag 1 may be woven via a so-called one-piece weaving technique, in which the two layers 2, 3 are woven simultaneously, with the yarns 4, 5 of the two layers 2, 3 being interwoven at predetermined regions to form the peripheral seam 6 (and optionally other seams and/or other interconnections not shown in Figure 1) as an integral structural feature of the airbag 1. An exemplary one-piece weaving technique for making an airbag is described in more detail in International Patent Publication WO199009295A.

The airbag 1 illustrated in Figure 1 has a known configuration of integrally woven internal tether arrangement. At selected positions throughout the layers 2, 3, additional tether yarns 8 are also woven into the weave of the fabric, as illustrated schematically in Figure 1 and in more detail in Figure 2. The tether yarns 8 are woven so as to extend substantially parallel with the weft yarns 5 of the fabric (and thus substantially perpendicular to the warp yarns 4), and pass over and under successive warp yarns 4 within predetermined connection regions 9 so as to be implicated in the weave of the layers 2, 3 at the connection regions 9. The tether yarns 8 may have a different construction to the warp and weft yarns 4, 5 of the fabric layers 2, 3, such as described in European patent publication EP2407353A.

At the edges of each connection region 9, the tether yarns 8 pass out of the respective fabric layer 2, 3 in which they are woven and extend towards the opposing layer 3, 2. In the particular arrangement illustrated in Figures 1 and 2, the tether yarns 8 each extend into the opposing fabric layer 3, 2 and are woven integrally with it at another connection region 9. As will thus be noted from Figure 2, the tether yarns 8 are arranged to cross one another, passing out of one fabric layer 2, 3 and extending into the other fabric layer 3, 2. The tether yarns 9 thus cooperate to define a tether 10 which serves to interconnect the two fabric layers 2, 3 within and across the inflatable chamber 7 of the airbag 1. As illustrated in Figure 2, each tether 10 may be defined by a plurality of tether yarns 8; in this case two pairs of crossing tether yarns 8.

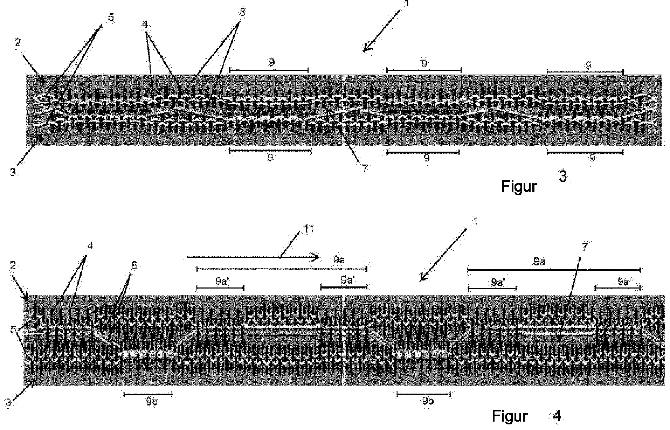

Figure 3 illustrates a larger expanse of the two fabric layers 2, 3, from which it will be seen that the tether yarns 8 are each implicated in the structure (i.e. in the weave) of the two layers 2, 3 at a plurality of connection regions 9. In the prior art arrangement shown in Figure 3, each layer 2, 3 has a plurality of spaced-apart connection regions 9 within which the tether yarns are interwoven with the fabric of the respective layer 2, 3. Furthermore, it will be noted that each connection region 9 of the first layer 2 is located opposite a respective connection region 9 of the second layer 3, across the inflatable chamber 7 defined between the two layers 2, 3.

Figure 3 illustrates the two fabric layers 2, 3 located generally adjacent one another, as would be the situation in the uninflated condition of the airbag 1. As will be appreciated by those of skill in the art, as the airbag 1 is inflated by the injection of inflating gas into the inflatable chamber 7, the first and second layers 2, 3 of the airbag 1 will begin to move apart such that the airbag will begin to achieve an inflatable configuration. During inflation, the tether yarns 8 will become tensioned, thereby cooperating to resist further movement of the two layers 2, 3 apart from one another as the airbag 1 is inflated, which can serve an important function in controlling the inflated depth or thickness of the airbag 1 in certain airbag installations, such as those involving the use of the airbag 1 in a safety arrangement within a motor vehicle.

Turning now to consider Figure 4, there is illustrated a tether arrangement for an airbag 1 in accordance with an embodiment of the present invention, which offers a significant advantage over the conventional arrangement described above and illustrated in particular in Figures 2 and 3. As will be apparent to those of skill in the art, the tether arrangement illustrated in Figure 4 shares several features and similarities with the conventional arrangement shown in Figures 2 and 3, which will therefore not be described in detail again. Nevertheless, it is to be noted that the airbag 1 in accordance with the invention may also be formed by a one-piece weaving technique such as that disclosed in International Patent Publication WO199009295A, and may incorporate tether yarns 8 having a different construction to the warp and weft yarns 4, 5 of the airbag's fabric layers 2, 3, such as described in European patent publication EP2407353A.

As will be observed, in the arrangement illustrated in figure 4 the tether yarns 8 do not cross one another as they pass out of the weave of one fabric layer and into the weave of the other fabric layer. In contrast to the conventional arrangement illustrated in figures 2 and 3, the tether yarns 8 instead each follow a substantially similar path through the weave of the two layers 2, 3. In particular, it will be observed that the tether yarns 8 follow a path in which they are each implicated in the weave of the first layer 2 (for example by being interwoven with warps yarns 4 of the first layer 2) within a plurality of first connection regions 9a, and in which they are each implicated in the weave of the second layer 3 (for example by being interwoven with warps yarns 4 of the first layer 2) within a plurality of second connection regions 9b. The tether yarns 8 are interwoven with the yarns of the fabric layers 2, 3 only within the connection regions 9a, 9b. It is envisaged that the warp yarns 8 will be integrally woven into the weave of the two layers of fabric 2, 3, within the connection regions 9a, 9b during the one-piece weaving process by which the fabric layers 2, 3 themselves are simultaneously woven.

As illustrated in Figure 4, in the particular arrangement illustrated, each first connection region 9a actually comprises a pair of connection sub-regions 9a' which are spaced apart from one another in the weft direction 11 of the first layer of fabric 2. Within each first connection region 9a, it will be observed that the tether yarns 8 are interwoven with the yarns of the first layer of fabric 2 only within the connection sub-regions 9a'. The tether yarns 8 thus pass between the connection sub-regions 9a' within each first connection region 9a without being implicated in the weave structure of the first layer 2 (or indeed the second layer 3). Between the connection sub-regions 9a', the tether yarns 8 simply pass adjacent the first fabric layer 2, within the inflatable chamber 7 of the airbag. It is to be appreciated, however, that in other embodiments, the tether yarns 8 may be interwoven with the yarns of the first layer of fabric 2 throughout the width (in the weft direction 11) of each first connection region 9a, in which case there will be no discrete sub-regions 9a' as described above.

The first connection regions 9a themselves are also spaced apart from one another in the weft direction 11 of the first layer of fabric 2, and indeed the second connection regions 9b are also spaced apart from one another in the weft direction 11 of the second layer of fabric 3. Significantly, it will be observed that the tether yarns 8 are implicated in the weave of the layers of fabric 2, 3 in an arrangement in which each first connection region 9a is wider in a length-direction of the tether yarns 8 (i.e. corresponding to the weft direction 11 in this embodiment) than each of the second connection regions 9b. It will also be observed that there is a greater number of connection sub-regions 9a' (i.e. where the tether yarns 8 are actually implicated in the weave of the first layer 2) than second connection regions 9b (i.e. where the tether yarns 8 are implicated in the weave of the second layer 3). Furthermore, it will be observed that the first connection regions 9a and the second connection regions 9b are offset relative to one another in the weft direction 11 of the fabric layers 2, 3, such that the first connection regions 9a of the first layer of fabric 2 do not oppose any of the second connection regions 9b of the second layer of fabric 3 across the inflatable chamber 7, and *vice-versa.* The arrangement is such that at least some of the second connection regions 9b are each interposed between two adjacent first connection regions 9a, in the weft direction 11.

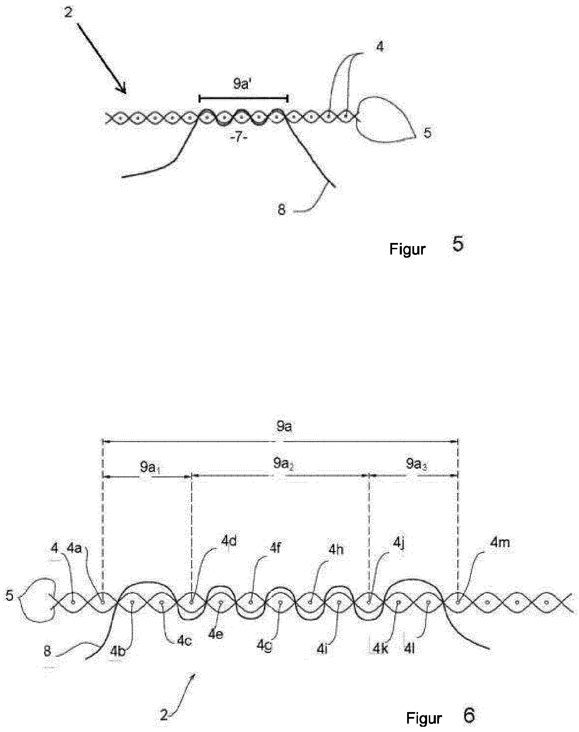

Figure 5 illustrates one way in which the tether yarns 8 may each be implicated in the weave of either fabric layer 2, 3. For convenience, Figure 5 illustrates a single tether yarn implicated 8 in the weave of the first fabric layer 2 within a sub-region 9a' of a first connection region 9a, but it is to be appreciated that the tether yarn 8 may be implicated in the weave of the second fabric layer 3 within a second connection region 9b in substantially the same manner. As will be observed, the tether yarn 8 passes between two adjacent warp yarns 4 of the first fabric layer 2 from within the inflatable chamber 7 of the airbag, and is then interwoven between adjacent warp yarns 4 of the fabric layer 2 in a plain weave (i.e. passes over/under every other warp yarn 4) within the sub-region 9a', before passing out of the fabric layer 2 on the side of the inflatable chamber 7 (and then extending towards a neighbouring sub-region 9a', or towards the second fabric layer 3, which is not shown in Figure 5). The sub-region 9a' illustrated in Figure 5 comprises a group of five adjacent warp yarns 4 with which the tether yarn 8 is interwoven. In other configurations, it is envisaged that the sub-regions 9a', or the second connection regions 9b may comprise more or fewer warp yarns 4, for example three, seven, nine, eleven, thirteen, or indeed any convenient odd number, such that the tether yarn 8 will enter and exit the sub-region 9a' or second connection region 9b from the side of the inflatable chamber 7. In arrangements in which the tether yarns 8 are interwoven with the yarns of the first layer of fabric 2 throughout the width (in the weft direction 11) of a first connection region 9a, it is proposed that the first connection region 9a may comprise more than five adjacent warp yarns 4, for example seven, nine, eleven, thirteen, or indeed any convenient odd number.

Figure 6 illustrates another way in which the tether yarns 8 may each be implicated in the weave of either fabric layer 2, 3. For convenience, Figure 6 again illustrates a single tether yarn implicated 8 in the weave of the first fabric layer 2 within a first connection region 9a, but it is to be appreciated that the tether yarn 8 may be implicated in the weave of the second fabric layer 3 within a second connection region 9b in substantially the same manner. In this arrangement, the connection region 9a comprises a first portion 9a₁, a second portion 9a₂ and a third portion 9a₃. Each portion 9a₁₋₃ of the connection region 9a comprises a respective number of warp yarns 4 of the fabric layer 2 and an arrangement in which the tether yarn 8 passes between or over the warp yarns 4.

In the first portion 9a₁ of the connection region 9a, the tether yarn 8 passes between two adjacent warp yarns 4a, 4b from the inwardly directed side of the fabric layer 2 defining the inflatable chamber 7 to the outer side of the fabric layer 2, and then partly around two adjacent warp yarns 4b, 4c. When the tether yarn 8 passes partly around two or more adjacent warp yarns in this manner, the tether is said to "float" over the adjacent warp yarns 6. In other configurations, the tether yarn 8 may float over more than two adjacent warp yarns 4 in the first portion 9a, of the connection region 9a. For example, the tether yarn 8 may float over three adjacent warp yarns 4 in the first portion 9a₁ of the connection region 9a.

In the second portion 9a₂ of the connection region 9a, the tether yarn 8 passes between two warp yarns 4c, 4d from the outer side of the fabric layer 2 to the inwardly directed side, and the tether yarn 8 is interwoven with a predetermined number of single adjacent warp yarns 4d-4j in a plain weave. In the arrangement illustrated in Figure 6, the tether yarn 8 is interwoven with seven adjacent single warp yarns 4d-4j within the second portion 9a₂ of the connection region 9a such that the tether yarn 8 passes at least partly around three warp yarns 4e, 4g and 4i on the outer side of the fabric layer 2. However, in other arrangements the tether yarn 8 may be interwoven with more than seven single adjacent warp yarns 4. For example, the tether yarn 8 may be interwoven with nine, or eleven, or thirteen single adjacent warp yarns 4 in the second portion 9a₂ of the connection region 9a.

In the third portion 9a₃ of the connection region 9a, the tether yarn 8 passes between two adjacent warp yarns 4j, 4k from the inwardly directed side of the fabric layer 2 to the outer side of the fabric layer 2, and then floats over two adjacent warp yarns 4k, 4l on the outer side of the fabric layer 2. The tether yarn 8 then passes between a further two adjacent warp yarns 4l, 4m, and back into the inflatable chamber 7 of the airbag 1. In other configurations, the tether yarn 8 may float over more than two adjacent warp yarns 4 in the third portion 9a₃ of the connection region 9a. For example, the tether yarn 8 may float over three adjacent warp yarns 4 in the third portion 9a₃ of the connection region 9a.

In the arrangements described above with reference to Figure 6, the tether yarn 8 floats over at least two adjacent warp yarns 4 in the first and third portions 9a₁, 9a₃ of the connection region 9a, and is interwoven with single adjacent warp yarns 4d-4j in the second portion 9a₂ of the connection region 9a. Floating the tether yarn 8 over at least two adjacent warp yarns on one side of the fabric layer 2 in the first and third portions 9a₂, 9a₃ of the connection region 9a allows some movement between the tether yarn 8 and the inherent yarns 4, 5 of the fabric layer 2, which absorbs some of the shock load when the air-bag 1 is inflated. This can help to reduce the likelihood of the tether yarn 8 snapping as the airbag 1 is inflated.

In arrangements in which the tether yarns 8 are implicated in the weave of both fabric layers 2, 3 in the manner shown in Figure 6, it is envisaged that the first connection regions 9a may be configured such that the tether yarn 8 is interwoven with a greater number adjacent warp yarns 4 within the second portion 9a₂ of each first connection region 9a than within the equivalent second portion of each second connection region 9b. In this way, the tether yarns 8 may be implicated in the weave of the first layer of fabric 2 throughout each first connection region 9a, such that the first connection regions 9a are wider in the weft direction 11 than the second connection regions 9b within which the tether yarns are implicated in the weave of the second layer 3. Alternatively, it is envisaged that each first connection region 9a may have the configuration shown in Figure 6, whilst each second connection region 9b may have the (shorter) configuration shown in Figure 5.

For the sake of convenience and clarity, Figure 4 illustrates only two exemplary tether yarns 8, whilst Figures 5 and 6 each illustrate only single exemplary tether yarns 8. However, it is to be appreciated than in practical embodiments there may be significantly more tether yarns 8 arranged in a side-by-side relationship to one another, the tether yarns 8 being distributed amongst the weft yarns 5 of the two fabric layers 2, 3, so as to extend generally parallel to the weft yarns 5 and perpendicular to the warp yarns 4, and thereby collectively defining a tether having a width which extends some distance along the warp-direction of the fabric (i.e. into the page as Figures 4-6 are viewed). Indeed, in some embodiments it is envisaged that the tether yarns 8 may be provided within a third layer of fabric woven from a third set of warp yarns and the tether yarns 8, wherein the tether yarns 8 define weft yarns of the third layer of fabric. Alternatively, the tether yarns 8 may be provided within a third layer of fabric woven in a manner such that the tether yarns define warp yarns of the third layer.

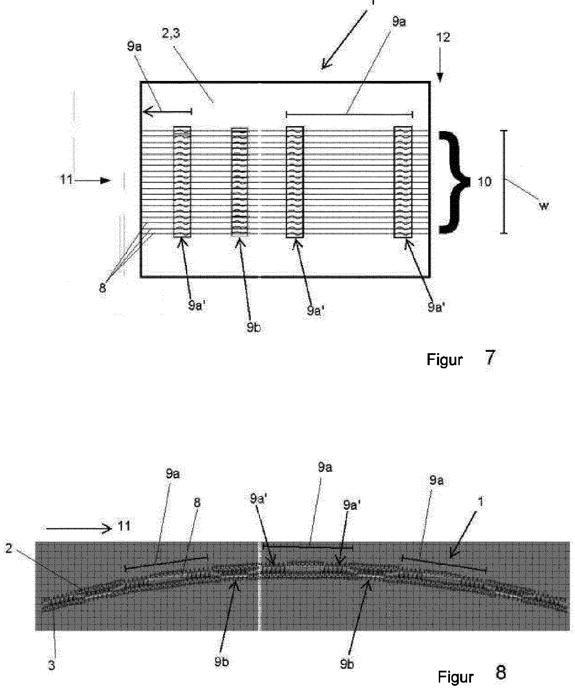

Figure 7 schematically illustrates a region of the airbag 1 as viewed from above, with the first (upper) layer of fabric 2 superimposed on top of the second (lower) layer of fabric 3. The warp yarns 4 of the two layers 2, 3 are substantially aligned with the direction indicated by arrow 12, and weft yarns 5 are substantially aligned with the direction indicated by arrow 11. A plurality of generally parallel tether yarns 8 are provided amongst the weft yarns. The warp yarns are implicated in the weave of the upper layer 2 in a plurality of first connection regions 9a (only one complete first connection region 9a being shown) which are spaced apart in the weft direction 11 of the fabric layers 2, 3, and each of which comprises a pair of connection sub-regions 9a'. The tether yarns 8 are also implicated in the weave of the lower layer 3 in a plurality of second connection regions 9b in the manner described above, although within the extent of the region of the airbag 1 illustrated in Figure 7 only a single second connection 9b is shown. As will be observed, each connection sub-region 9a' and each second connection region 9b is elongate so as to have a length in the warp direction 12. Each connection region 9a, 9b thus extends across a region of its respective layer of fabric 2, 3 so as to traverse a plurality of weft yarns. As will therefore be appreciated, the tether yarns 8 cooperate to define a tether 10 which has a width w in the warp direction 12 of the fabric layers 2, 3.

In the arrangement of Figure 7, the tether yarns 8 are all interwoven with the same warp yarns 4 running through the two fabric layers 2, 3, such that the sub-regions 9a' of the first connection regions, and the second connection regions 9b are all parallel to one another and oriented such that their length direction is substantially parallel to the warp direction 12 and perpendicular to the weft direction 11. However, this is not essential, and indeed in some circumstances it can be beneficial to arrange the tether yarns 8 such that successive tether yarns 8 are implicated in the weave of the fabric layers 2, 3 by being interwoven with different groups of warp yarns 4 to one another. As will be appreciated by those of skill in the art, the effect of this can be to orientate the connection regions 9a, 9b so that their elongate extension traverses a plurality of weft yarns 5 at an oblique angle to the weft yarns, and also thus at an oblique angle to the warp yarns 4.

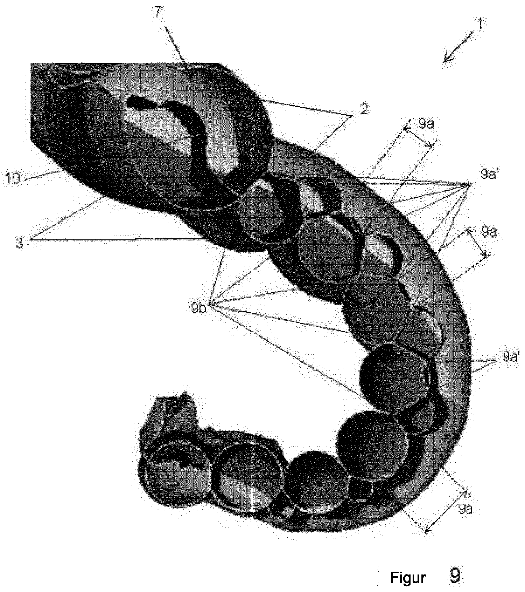

Figure 8 is a view generally similar to that of Figure 4, but which shows the airbag 1 in a partially inflated condition in which an initial volume of inflating gas has been directed into the inflatable chamber 7 of the airbag 1 so as to begin inducing curvature to the airbag. Figure 9 is a perspective view showing a transverse cross section through an airbag 1 having a tether configuration of the type shown in Figures 4 and 8, but which shows the airbag 1 in a substantially fully inflated condition. Figure 9 shows more clearly the width of the internal tether 10 which is defined by the tether yarns 8. As will be appreciated from both figures, the inflating gas urges the two fabric layers 2, 3 apart from one another, such that the airbag 1 achieves a degree of inflated depth across the inflatable chamber. Movement of the fabric layers 2, 3 apart from one another is restrained by the tether yarns 8 running through the airbag 1. As will be appreciated, the tether yarns 8 are placed under tension in this condition, and subjected to strain. Because of the above-described configuration of the first and second connection regions 9a, 9b where the tether yarns 8 are implicated in the weave of the first and second fabric layers 2, 3 respectively, with the first connection regions 9a in the first fabric layer 2 having a greater width in the length-direction of the tether yarns 8 than second connection regions 9b in the second fabric layer 3, the first and second connection regions 9a, 9b are subjected to different levels of strain to one another. It has been found that the effect of this is to induce curvature to the airbag 1 when it is inflated, as illustrated in Figure 8 and particularly in Figure 9. As will be observed, the above-described tether configuration is effective to induce curvature to the airbag 1, the curvature being convex on the side of the first fabric layer 2 (the layer with wider tether connection regions 9a), and concave on the side of the second fabric layer 3 (the layer with narrower tether connection regions 9b). The airbag 1 is thus configured to bend towards the second fabric layer 3 upon inflation. As will be appreciated, the airbag 1 bends about the longitudinal extension direction of the first and second connection regions 9a, 9b.

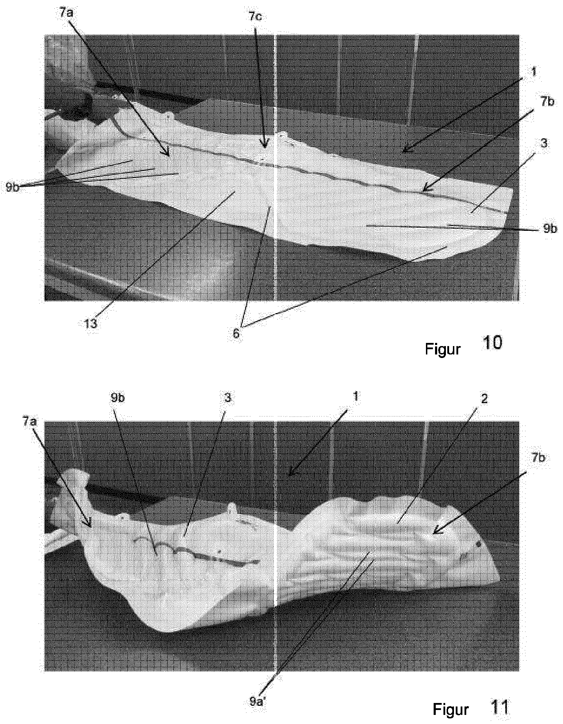

Figure 10 illustrates a one-piece woven airbag 1 in accordance with the invention, in a pre-inflated configuration in which it is laid flat. The airbag 1 has a somewhat elongate configuration, and is shown with its second fabric layer 3 (the layer with the narrower second connection regions 9b) presented upwardly. The integral peripheral seam 6 of the illustrated airbag 1 follows a circuitous path having a re-entrant region such that the resulting inflatable chamber 7 of the airbag has a shape resembling a pair of spectacles, presenting two major chamber regions 7a, 7b which are fluidly interconnected by a narrower region 7c. Adjacent the re-entrant region of the peripheral seam 6, outside the inflatable chamber 7, the yarns of the two fabric layers 2, 3 are interwoven to define a non-inflatable region 13 of the airbag, in the manner of a thicker web of fabric.

The second connection regions 9b within which the tether yarns 8 are implicated in the weave of the second fabric layer 3 are also clearly visible in Figure 10. As will be observed, a first group of the second connection regions 9b is provided in a region of the fabric layer 3 defining the first chamber region 7a, and a second group of the second connection regions 9b is provided in a region of the fabric layer 3 defining the second chamber region 7b. Although not visible in Figure 10, first connection regions 9a within which the tether yarns 8 are implicated in the weave of the underlying first fabric layer 2 are also provided. Like the second connection regions 9b, the first connection regions 9a are similarly split into two groups - namely a first group provided in a region of the underlying first fabric layer 2 defining the first chamber region 7a, and a second group provided in a region of the underlying first fabric layer 2 defining the second chamber region 7b. The connection regions 9a, 9b in the first group (i.e. corresponding to the first chamber region 7a) are arranged to as to extend parallel to one another, whilst the connection regions 9a, 9b in the second group (i.e. corresponding to the second chamber region 7b) are also arranged to as to extend parallel to one another. However, it will be observed that the connection regions 9a, 9b of the first group are not parallel to the connection regions 9a, 9b of the second group.

Turning now to consider Figure 11, the airbag 1 of Figure 10 is illustrated in an inflated condition. As will be noted, the tether yarns 8 forming the first and second connection regions 9a, 9b of the first group (i.e. corresponding to the first chamber region 7a) serve to induce a first curvature to the first chamber region 7a of the airbag 1 such that it bends upwardly. Similarly, the tether yarns 8 forming the first and second connection regions 9a, 9b of the second group (i.e. corresponding to the second chamber region 7b) serve to induce a second curvature to the second chamber region 7b of the airbag 1 such that it also bends upwardly. As will be appreciated, the first chamber region 7a is thus caused to achieve an inflated shape in which it bends about the longitudinal extension direction of the first group of connection regions 9a, 9b, and the second chamber region 7a is thus caused to achieve an inflated shape in which it bends about the longitudinal extension direction of the second group of connection regions 9a, 9b. As will be noted, in this arrangement each chamber region 7a, 7b is thus configured to bend in a single direction, with the two directions being different to one another and defined by the direction of extension of the connection regions 9a, 9b across the local regions of the fabric layers 2, 3.

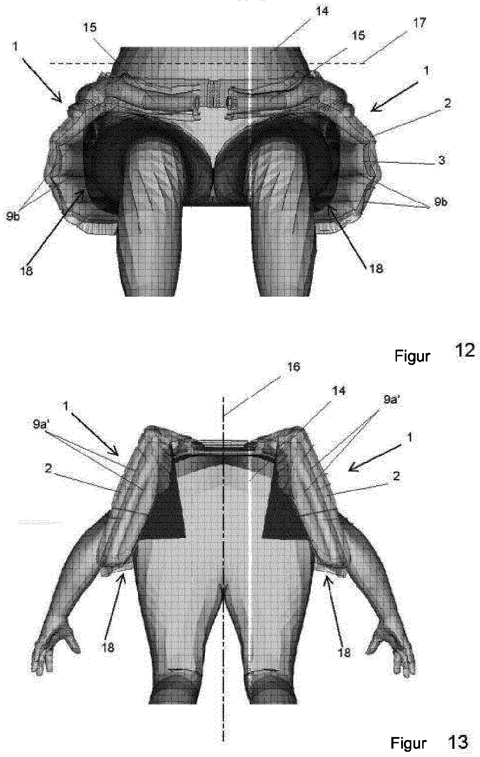

Figures 12 and 13 illustrate a practical embodiment of airbags 1 configured to bend in a single direction in the manner described above. The illustrated arrangement comprises a pair of hip-protection airbags 1 arranged and configured to provide hip protection to a person 14 in a sitting position. As shown in figure 12, each airbag 1 is provided with a respective inflator such as a gas generator 15 to direct a volume of inflating gas into the internal chamber 7 of the airbag 1. It is envisaged that the airbags 1 may be provided within a garment or the like configured to be worn by the person 14. The airbags 1 are arranged to inflate into respective deployed positions around a respective hip area of the person.

The airbags 1 of figures 12 and 13 are configured so as to be optimised to provide good bending characteristics around the user's sagittal axis (indicated at 16 in Figure 13) so that the airbags 1 each extend underneath the user's hips. This may be achieved by orientating the connection regions 9a, 9b (within which the tether yarns 8 are implicated in the constituent fabric layers 2, 3 of the airbags) so that they extend generally or approximately parallel to the user's transverse plane (indicated at 17 in Figure 12). However, because the airbags 1 are configured to bend only around the user's sagittal axis 16, they are less well suited to bend around the sides of the user's hips, which results in the airbags 1 achieving respective inflated configurations in which they can flare outwardly from the user's rear hip area and away from the user's upper legs, leaving a gap 18 between the user's legs and each airbag 1.

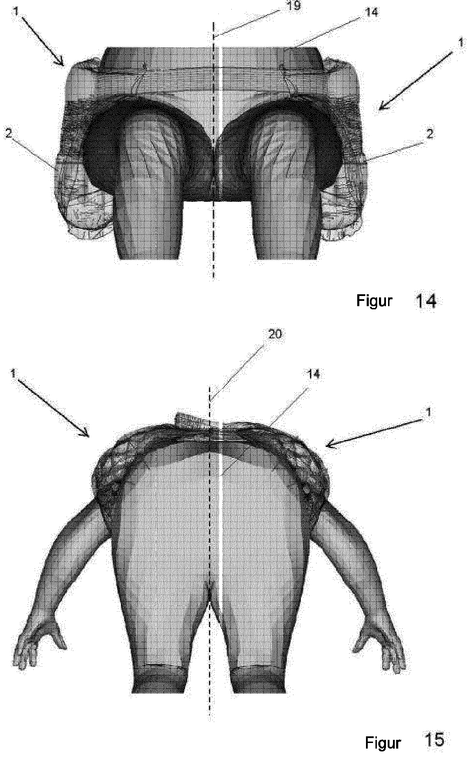

Figures 14 and 15 illustrate an alternative configuration of the hip protection airbags 1 shown in Figures 12 and 13, which are also configured to bend in a single direction in the manner described above. In this arrangement, however, the airbags 1 are configured so as to be optimised to provide good bending characteristics around the user's vertical axis (indicated at 19 in Figure 14) so that the airbags better extend around the sides of the user's hips upon deployment, thereby addressing the potential shortcoming of the airbags 1 illustrated in Figures 12 and 13. This may be achieved by orientating the connection regions 9a, 9b (within which the tether yarns 8 are implicated in the constituent fabric layers 2, 3 of the airbags) so that they extend generally or approximately parallel to the user's sagittal plane (indicated at 20 in Figure 12). However, because the airbags 1 are configured to bend only around the user's vertical axis 19, they are now less well suited to bend under the user's hips, which results in the airbags 1 achieving respective inflated configurations in which they provide less effective coverage underneath the user's hips than the airbags of Figures 12 and 13, as can be seen by comparing Figure 15 with Figure 13.

In some circumstances, it can therefore be desirable to provide an airbag which can be optimised to bend in two directions rather than merely one direction.

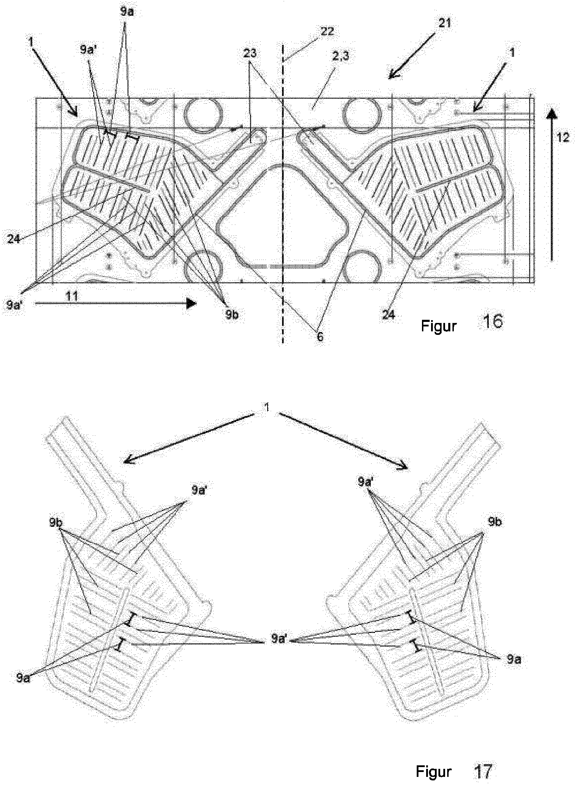

Figure 16 illustrates a short length of one-piece woven production web 21 comprising opposing first and second layers of fabric 2, 3. The production web 21 is woven via a one-piece weaving technique such that the two layers of fabric 2, 3 are woven simultaneously on a single specially-configured loom, in a manner known *per se.* The warp yarns 4 of the fabric extend in the warp direction 12, and the weft yarns 5 of the fabric extend in the weft direction 11. The short length of web 21 illustrated in Figure 16 can be seen to comprise a pair of integrally formed hip protection airbags 1, the two airbags 1 being formed within the web as mirror images of one another across the longitudinal (i.e. aligned with the warp direction 12) axis 22. The airbags 1 are defined by respective peripheral seams 6 within which the yarns of the two layers of fabric 2, 3 are interwoven such that each peripheral seam 6 is formed as an integral structural feature of the fabric of the respective airbag 1.

The peripheral seam 6 of each airbag 1 defines the airbag's main inflatable region, but also an elongate inlet region 23 which will be understood to be configured to receive an inflator. In the arrangement illustrated in figure 16 it will also be observed that each airbag 1 has an additional integrally formed seam 24 which is substantially linear and which extends inwardly from the peripheral seam 6. As will be explained in more detail hereinafter, the additional seam 24 of each airbag represents a flexure seam and is provided to help induce curvature to the airbag 1 when it is inflated.

Each of the airbags 1 may be removed from the production web 21 by cutting through the fabric layers 2, 3 of the web, around the peripheral seam 6. The resulting airbags 1 are illustrated after removal from the production web 21 in Figure 17, in which it will be noted that the airbags 1 are shown in different orientations to Figure 16.

As in the previous embodiments, the airbags 1 shown in Figures 16 and 17 are also provided with internal tether arrangements of the same general configuration as described previously, and thus comprise a plurality of tether yarns 8 which are implicated in the weave of the first fabric layer 2 at first connection regions 9a (each of which comprises a pair of connection sub-regions 9a'), and which are implicated in the weave of the second fabric layer 3 at second connection regions 9b. The first and second connection regions 9a, 9b are all elongate, and are arranged so as to extend at oblique angles to both the warp direction 12 and the weft direction 11. The connection regions 9a, 9b thus extend at oblique angles to the warp yarns 4 and the weft yarns 5 of the fabric layers 2, 3. As will be understood from the foregoing description of previous embodiments, the tether yarns 8 are provided amongst the weft yarns 5 and thus follow the weft direction 11. The tether yarns 8 are interwoven with warp yarns 4 of the first fabric layer 2 within the first connection regions 9a, and are interwoven with warp yarns 4 of the second fabric layer 3 within the second connection regions 9b.

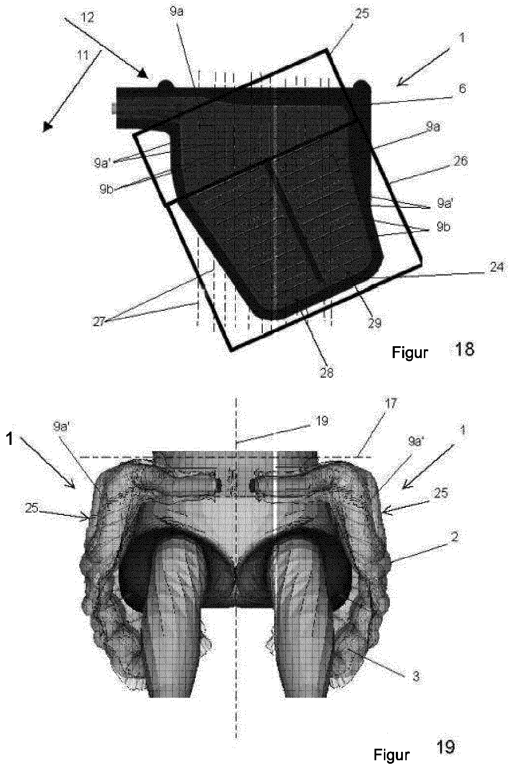

The particular arrangement of the connection regions 9a, 9b in this embodiment may be most clearly understood having regard to Figure 18, in which the sub-regions 9a' of the first connection regions 9a (within which tether yarns 8 are implicated in the weave of the first fabric layer 2) are illustrated in solid lines, and the second connection regions 9b (within which tether yarns 8 are implicated in the weave of the second fabric layer 3) are indicated in dashed lines.

In particular, it will be observed in Figure 18 that the connection regions 9a, 9b are provided in two discrete groups of connection regions, namely a first group positioned within the first notional rectangular region 25, and a second (larger) group positioned within the second notional rectangular region 26. The two groups 25, 26 are located adjacent one another, and as will be appreciated, each group 25, 26 of connection regions comprises both first connection regions 9a (within which tether yarns 8 are implicated in the weave of the first fabric layer 2) and second connection regions 9b (within which tether yarns are implicated in the weave of the second layer 3.

As will be observed, the connection regions 9a, 9b within the first group 25 are all substantially parallel to one another, whilst the connection regions 9a, 9b within the second group 26 are also substantially parallel to one another. However, the connection regions 9a, 9b of the first group 25 are non-parallel to the connection regions 9a, 9b of the second group 26. The connection regions 9a, 9b of the first group 25 thus extend at an oblique angle to the extension of the connection regions 9a, 9b of the second group 26.

A significant difference between the configuration of the airbags 1 illustrated in Figures 16 to 18 and the previous embodiment illustrated in Figures 10 and 11 (which also has two discrete groups of connection regions 9a, 9b) concerns the relationship between the connection regions 9a, 9b of the first group 25 and the connection regions 9a, 9b of the second group 26.

In the configuration of figures 16 to 18 it will be noted that at least some of the sub-regions 9a' of the first connection regions 9a, and the second connection regions 9b of the second group 26 extend across the axes of extension 27 along which the sub-regions 9a' of the first connection regions 9a, and the second connection regions 9b of the first group 25 extend. As will be appreciated in light of the preceding description, the tether yarns forming the first group 25 of connection regions 9a, 9b will serve induce a first curvature to the airbag 1 upon inflation, to bend the airbag 1 about the longitudinal extension direction of the first group of connection regions 9a, 9b (i.e. about the extension axes 27). As will therefore be observed, the second group 26 of connection regions 9a, 9b thus traverse the axes 27 about which the first group of connection regions will induce curvature to the airbag 1. This places the second group 26 of connection regions 9a, 9b within a region of the airbag 1 in which curvature is induced by the first group of connection regions 9a, 9b. Furthermore, the tether yarns forming the second group 26 of connection regions 9a, 9b will serve induce a second curvature to the airbag 1 upon inflation, to bend the airbag 1 about the longitudinal extension direction of the second group of connection regions 9a, 9b. Given that the second group 26 of connection regions 9a, 9b are non-parallel to the first group 25 of connection regions 9a, 9b, it will be appreciated that the second curvature will be in a different direction or sense to the first curvature. Because the second group 26 of connection regions 9a, 9b traverse the axes 27 about which the first group 25 of connection regions 9a, 9b induce the first curvature to the airbag 1, the effect is therefore to induce two differently directed curvatures to the same region of the airbag 1, thereby effectively bending the airbag in two different directions.

Having particular regard to the second group 26 of connection regions 9a, 9b, it will be noted from Figure 18 that the second group 26 is divided into two sets of connection regions 9a, 9b, namely a first set 28 located on one side of the flexure seam 24, and a second set 29 located on the opposite side of the flexure seam 24. The flexure seam 24 thus separates the two sets 28, 29 of connection regions 9a, 9b within the second group. Furthermore, it will be noted that the flexure seam 24 extends generally orthogonal to the extension of the connection regions 9a, 9b within the second group 26. As will also be observed, each sub-region 9a' of the first connection regions 9a of the first set 28 is aligned with a respective sub-region 9a' of the second set 29 so that each pair of aligned connection sub-regions 9a' extend collinearly. Similarly, each second connection 9b of the first set 28 is aligned with a respective second connection region 9b of the second set 29 so that each pair of aligned second connection regions 9b extend collinearly.

Noting that the flexure seam 24 interconnects the two layers of fabric 2, 3 of the airbag 1, it will be understood that the flexure seam 24 therefore serves to restrict the inflated depth of the inflatable chamber 7 between the two sets 28, 29 of connection regions 9a, 9b within the second group 26. In this way, the flexure seam 24 can help to permit the second group 26 of connection regions 9a, 9b to induce the second curvature to the airbag 1, the flexure seam 24 effectively defining a crease about which the second group 26 of connection regions 9a, 9b can then more easily bend the airbag 1.

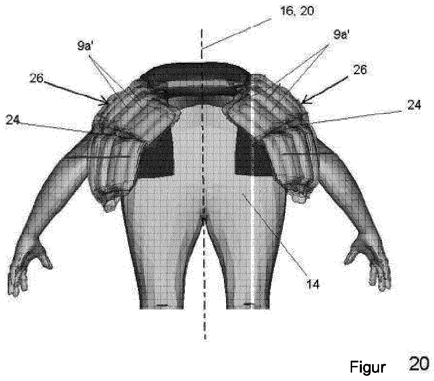

Figures 19 and 20 illustrate a pair of airbags 1 of the configuration described above with reference to Figures 16 to 18, showing the airbags 1 in an inflated condition to provide improved hip protection to a person 14 in a sitting position. Both airbags 1 are arranged such that their first fabric layers 2 are directed outwardly, and their second fabric layers 3 are directed inwardly, towards the user 14.

As will be appreciated, the airbags 1 shown in Figures 19 and 20 are optimised to provide good bending characteristics in two different directions, namely around the user's sagittal axis 16 so that the airbags 1 extend underneath the user's hips, and around the user's vertical axis 19 so that the airbags 1 extend around the sides of the user's hips.

The first group 25 of connection regions 9a, 9b are positioned within an upper region of the airbag 1, and are orientated such that they extend generally or approximately parallel to the user's sagittal plane 16. The connection regions of the first group 25 are therefore configured to induce the first curvature to the airbag - bending the airbag 1 around the user's vertical axis 19 so that the airbags 1 extend tightly around the sides of the user's hips instead of flaring outwardly as was observed in the single-bend arrangement of Figures 12 and 13. The second group 26 of connection regions 9a, 9b are positioned within a lower region of the airbag 1, and are orientated such that they extend generally or approximately parallel to the user's transverse plane 17. The connection regions of the second group 25 are therefore configured to induce the second curvature to the airbag - bending the airbag 1 around the user's sagittal axis 16 so that the airbags 1 also extend underneath the user's hips, thereby providing improved coverage underneath the user's hips compared to the single-bend arrangement of Figures 14 and 15.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention as defined by claim 1.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the words "have", "comprise", and "include", and variations such as "having", "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means, for example, +/- 10%.

The words "preferred" and "preferably" are used herein refer to embodiments of the invention that may provide certain benefits under some circumstances. It is to be appreciated, however, that other embodiments may also be preferred under the same or different circumstances. The recitation of one or more preferred embodiments therefore does not mean or imply that other embodiments are not useful, and is not intended to exclude other embodiments from the scope of the claims.

## Claims

1. An airbag (1) configured to be inflated by a source of gas, the airbag (1) being formed from first and second layers (2, 3) of fabric arranged in superimposition to define an inflatable chamber (7) between the layers for the receipt of inflating gas; each layer of fabric (2, 3) having a structure comprising at least one yarn, and the two layers (2, 3) being interconnected by a plurality of tether yarns (8) extending between the layers (2, 3) within the inflatable chamber (7), wherein at least some of said tether yarns (8) are implicated in the structure of said layers (2, 3) within a first group (25) of connection regions comprising a plurality of first connection regions (9a) within which the tether yarns (8) are implicated in the structure of the first layer (2), and a plurality of second connection regions (9b) within which the tether yarns (8) are implicated in the structure of the second layer (3); and at least some of said tether yarns (8) are implicated in the structure of said layers (2, 3) at a second group (26) of connection regions comprising a plurality of first connection regions (9a) within which the tether yarns (8) are implicated in the structure of the first layer (2), and a plurality of second connection regions (9b) within which the tether yarns (8) are implicated in the structure of the second layer (3); wherein within each said group (25, 26) of connection regions: i) each said first connection region (9a) is wider in a length-direction of the tether yarns (8) than each said second connection region (9b), and ii) said second connection regions (9b) are offset relative to said first connection regions (9a) such that said second connection regions (9b) do not oppose any said first connection regions (9a) across the inflatable chamber (7); and wherein said first and second connection regions (9a, 9b) within each group (25, 26) are elongate and extend generally parallel to one another and across respective layers (2, 3) of the airbag, the connection regions (9a, 9b) of the first group (25) being non-parallel to the connection regions (9a) of the second group (26); the tether yarns (8) serving to induce a first curvature to the airbag (1) via the first group (25) of connection regions (9a, 9b), and to induce a second curvature to the airbag (1) via the second group (26) of connection regions (9a, 9b), when the inflatable chamber (7) is inflated.

2. An airbag (1) according to claim 1, wherein each connection region (9a, 9b) extends along a respective axis of extension (27); at least some of the connection regions (9a, 9b) of one of said groups (26) extending across the axes of extension (27) along which at least some of the connection regions (9a, 9b) of the other group (25) extend.

3. An airbag (1) according to claim 1 or claim 2, wherein the connection regions (9a, 9b) of the first group (25) extend at an oblique angle to the extension of the connection regions (9a, 9b) of the second group (26).

4. An airbag (1) according to any preceding claim, wherein at least one of said groups (26) of connection regions comprises: a first set (28) of said first and second connection regions (9a, 9b), and a second set (29) of first and second connection regions (9a, 9b); each first connection region (9a) of said first set (28) extending collinearly relative to a respective first connection region (9a) of said second set (29), and each second connection region (9b) of the first set (28) extending collinearly relative to a respective second connection (9b) of the second set (29); and wherein the first and second sets (28, 29) of connection regions (9a, 9b) are separated from one another by a flexure seam (24) interconnecting the first and second layers of fabric (2, 3).

5. An airbag (1) according to claim 4, wherein said flexure seam (24) is substantially linear and extends generally orthogonal to the extension of said connection regions (9a, 9b) of the first and second sets (28, 29).

6. An airbag (1) according to any preceding claim, wherein within each said group (25, 26) of connection regions (9a, 9b): said first connection regions (9a) are spaced-apart from one another across a portion of said first layer (2); and said second connection regions (9b) are spaced apart from one another across an opposing portion of said second layer (3).

7. An airbag (1) according to any preceding claim, wherein within each said group (25, 26) of connection regions (9a, 9b): no tether yarns (8) extend between any of said second connection regions (9b) without being implicated in the structure of the first layer (2) between said second connection regions (9b).

8. An airbag (1) according to any preceding claim , wherein within at least one said group (25, 26) of connection regions (9a, 9b): at least one said first connection region (9a) comprises a plurality of spaced-apart connection sub-regions (9a') within which said tether yarns (8) are implicated in the structure of said first layer (2), and wherein said tether yarns (8) extend between said connection sub-regions (9a') without being implicated in the structure of either the first layer (2) or the second layer (3) between said connection sub-regions (9a').

9. An airbag (1) according to any preceding claim, wherein each said layer (2, 3) of fabric is woven and has a weave comprising a plurality of parallel warp yarns (4) and a plurality of parallel weft yarns (5).

10. An airbag (1) according to claim 9, wherein tether yarns (8) are interwoven with yarns (4) of the first layer (2) within each said first connection region (9a), and tether yarns (8) are interwoven with yarns (4) of the second layer (3) within each said second connection region (9b).

11. An airbag (1) according to claim 9, as dependent upon claim 8, wherein tether yarns (8) are interwoven with yarns (4) of the first layer (2) only within said connection sub-regions (9a') and are interwoven with yarns (4) of the second layer (3) only within said second connection regions (9b).

12. An airbag (1) according to any one of claims 9 to 11, wherein the connection regions (9a, 9b) of the first and second groups (25, 26) extend at oblique angles to both the warp yarns (4) and the weft yarns (5) of the two layers of fabric (2, 3).

13. An airbag (1) according to any one of claims 9 to 12, wherein said tether yarns (8) extend generally parallel to one another and generally parallel to said weft yarns (5) of the fabric layers (2, 3).

14. An airbag (1) according to any one of claims 9 to 13, wherein the airbag (1) is a one-piece woven airbag comprising at least one integrally woven seam (6) defined by a region in which yarns (4, 5) of the weave of one said layer (2) are interwoven with yarns (4, 5) of the weave of the other said layer (3), and wherein said tether yarns (8) are integrally woven into the weave of said layers (2, 3) within said connection regions (9a, 9b).

15. An airbag (1) according to claim 4 or claim 5, wherein the airbag (1) is a one-piece woven airbag comprising at least one integrally woven seam (6, 24) defined by a region in which yarns (4, 5) of the weave of one said layer (2) are interwoven with yarns (4, 5) of the weave of the other said layer (3), said tether yarns (8) being integrally woven into the weave of said layers (2, 3) within said connection regions (9a, 9b), and wherein said at least one integrally woven seam (6, 24) includes said flexure seam (24).

## Patentansprüche

1. Airbag (1), der konfiguriert ist, um durch eine Gasquelle aufgeblasen zu werden, wobei der Airbag (1) aus einer ersten und einer zweiten Gewebeschicht (2, 3) ausgebildet ist, die übereinander angeordnet sind, um zwischen den Schichten eine aufblasbare Kammer (7) für die Aufnahme von Füllgas zu definieren; wobei jede Gewebeschicht (2, 3) eine Struktur aufweist, umfassend mindestens einen Faden, und die zwei Schichten (2, 3) durch eine Vielzahl von Haltefäden (8) miteinander verbunden sind, die sich zwischen den Schichten (2, 3) innerhalb der aufblasbaren Kammer (7) erstrecken, wobei mindestens einige der Haltefäden (8) in die Struktur der Schichten (2, 3) innerhalb einer ersten Gruppe (25) von Verbindungsbereichen eingebunden sind, umfassend eine Vielzahl von ersten Verbindungsbereichen (9a), innerhalb derer die Haltefäden (8) in die Struktur der ersten Schicht (2) eingebunden sind, und eine Vielzahl von zweiten Verbindungsbereichen (9b), innerhalb derer die Haltefäden (8) in die Struktur der zweiten Schicht (3) eingebunden sind; und mindestens einige der Haltefäden (8) in die Struktur der Schichten (2, 3) in einer zweiten Gruppe (26) von Verbindungsbereichen eingebunden sind, umfassend eine Vielzahl von ersten Verbindungsbereichen (9a), innerhalb derer die Haltefäden (8) in die Struktur der ersten Schicht (2) eingebunden sind, und eine Vielzahl von zweiten Verbindungsbereichen (9b), innerhalb derer die Haltefäden (8) in die Struktur der zweiten Schicht (3) eingebunden sind; wobei innerhalb jeder Gruppe (25, 26) von Verbindungsbereichen: i) jeder erste Verbindungsbereich (9a) in einer Längsrichtung der Haltefäden (8) breiter als jeder zweite Verbindungsbereich (9b) ist und ii) die zweiten Verbindungsbereiche (9b) relativ zu den ersten Verbindungsbereichen (9a) derart versetzt sind, dass die zweiten Verbindungsbereiche (9b) über die aufblasbare Kammer (7) hinweg keinem der ersten Verbindungsbereiche (9a) gegenüberliegen; und wobei der erste und der zweite Verbindungsbereich (9a, 9b) innerhalb jeder Gruppe (25, 26) länglich sind und sich im Allgemeinen parallel zueinander und über die jeweiligen Schichten (2, 3) des Airbags hinweg erstrecken, wobei die Verbindungsbereiche (9a, 9b) der ersten Gruppe (25) nicht parallel zu den Verbindungsbereichen (9a) der zweiten Gruppe (26) sind; wobei die Haltefäden (8) dazu dienen, dem Airbag (1) über die erste Gruppe (25) von Verbindungsbereichen (9a, 9b) eine erste Krümmung zu verleihen und um dem Airbag (1) über die zweite Gruppe (26) von Verbindungsbereichen (9a, 9b) eine zweite Krümmung zu verleihen, wenn die aufblasbare Kammer (7) aufgeblasen wird.

2. Airbag (1) nach Anspruch 1, wobei sich jeder Verbindungsbereich (9a, 9b) entlang einer jeweiligen Erstreckungsachse (27) erstreckt; wobei sich mindestens einige der Verbindungsbereiche (9a, 9b) einer der Gruppen (26) über die Erstreckungsachsen (27) hinweg erstrecken, entlang derer sich mindestens einige der Verbindungsbereiche (9a, 9b) der anderen Gruppe (25) erstrecken.

3. Airbag (1) nach Anspruch 1 oder 2, wobei sich die Verbindungsbereiche (9a, 9b) der ersten Gruppe (25) in einem schrägen Winkel zu der Erstreckung der Verbindungsbereiche (9a, 9b) der zweiten Gruppe (26) erstrecken.

4. Airbag (1) nach einem der vorstehenden Ansprüche, wobei mindestens eine der Gruppen (26) von Verbindungsbereichen umfasst: einen ersten Satz (28) aus dem ersten und dem zweiten Verbindungsbereich (9a, 9b) und einen zweiten Satz (29) aus dem ersten und dem zweiten Verbindungsbereich (9a, 9b); wobei sich jeder erste Verbindungsbereich (9a) des ersten Satzes (28) kollinear relativ zu einem jeweiligen ersten Verbindungsbereich (9a) des zweiten Satzes (29) erstreckt und sich jeder zweite Verbindungsbereich (9b) des ersten Satzes (28) kollinear zu einem jeweiligen zweiten Anschlussbereich (9b) des zweiten Satzes (29) erstreckt; und wobei der erste und der zweite Satz (28, 29) von Verbindungsbereichen (9a, 9b) durch eine Biegenaht (24) voneinander getrennt sind, die die erste und die zweite Gewebeschicht (2, 3) miteinander verbindet.

5. Airbag (1) nach Anspruch 4, wobei die Biegenaht (24) im Wesentlichen linear ist und sich im Allgemeinen orthogonal zu der Erstreckung der Verbindungsbereiche (9a, 9b) des ersten und des zweiten Satzes (28, 29) erstreckt.

6. Airbag (1) nach einem der vorstehenden Ansprüche, wobei innerhalb jeder Gruppe (25, 26) von Verbindungsbereichen (9a, 9b): die ersten Verbindungsbereiche (9a) über einen Abschnitt der ersten Schicht (2) hinweg voneinander beabstandet sind; und die zweiten Verbindungsbereiche (9b) über einen gegenüberliegenden Abschnitt der zweiten Schicht (3) hinweg voneinander beabstandet sind.

7. Airbag (1) nach einem der vorstehenden Ansprüche, wobei innerhalb jeder Gruppe (25, 26) von Verbindungsbereichen (9a, 9b): sich keine Haltefäden (8) zwischen beliebigen der zweiten Verbindungsbereiche (9b) erstrecken, ohne in die Struktur der ersten Schicht (2) zwischen den zweiten Verbindungsbereichen (9b) eingebunden zu sein.

8. Airbag (1) nach einem der vorstehenden Ansprüche, wobei innerhalb mindestens einer Gruppe (25, 26) von Verbindungsbereichen (9a, 9b): mindestens ein erster Verbindungsbereich (9a) eine Vielzahl von beabstandeten Verbindungsunterbereichen (9a') umfasst, innerhalb derer die Haltefäden (8) in die Struktur der ersten Schicht (2) eingebunden sind, und wobei sich die Haltefäden (8) zwischen den Verbindungsteilbereichen (9a') erstrecken, ohne in die Struktur entweder der ersten Schicht (2) oder der zweiten Schicht (3) zwischen den Verbindungsunterbereichen (9a') eingebunden zu sein.

9. Airbag (1) nach einem der vorstehenden Ansprüche, wobei jede Gewebeschicht (2, 3) gewebt ist und eine Webart aufweist, umfassend eine Vielzahl paralleler Kettfäden (4) und eine Vielzahl paralleler Schussfäden (5).

10. Airbag (1) nach Anspruch 9, wobei Haltefäden (8) mit Fäden (4) der ersten Schicht (2) innerhalb jedes ersten Verbindungsbereichs (9a) verwoben sind und Haltefäden (8) mit Fäden (4) der zweiten Schicht (3) innerhalb jedes zweiten Verbindungsbereichs (9b) verwoben sind.

11. Airbag (1) nach Anspruch 9, wenn von Anspruch 8 abhängig, wobei Haltefäden (8) nur innerhalb der Verbindungsunterbereiche (9a') mit Fäden (4) der ersten Schicht (2) verwoben sind und nur innerhalb der zweiten Verbindungsbereiche (9b) mit Fäden (4) der zweiten Schicht (3) verwoben sind.

12. Airbag (1) nach einem der Ansprüche 9 bis 11, wobei sich die Verbindungsbereiche (9a, 9b) der ersten und der zweiten Gruppe (25, 26) zu sowohl den Kettfäden (4) als auch den Schussfäden (5) der zwei Gewebeschichten (2, 3) schräg erstrecken.

13. Airbag (1) nach einem der Ansprüche 9 bis 12, wobei sich die Haltefäden (8) im Allgemeinen parallel zueinander und im Allgemeinen parallel zu den Schussfäden (5) der Gewebeschichten (2, 3) erstrecken.

14. Airbag (1) nach einem der Ansprüche 9 bis 13, wobei der Airbag (1) ein einstückiger gewebter Airbag ist umfassend mindestens eine integral gewebte Naht (6), die durch einen Bereich definiert ist, in dem Fäden (4, 5) der Webart der einen Schicht (2) mit Fäden (4, 5) der Webart der anderen Schicht (3) verwoben sind, und wobei die Haltefäden (8) innerhalb der Verbindungsbereiche (9a, 9b) integral in die Webart der Schichten (2, 3) eingewebt sind.

15. Airbag (1) nach Anspruch 4 oder 5, wobei der Airbag (1) ein einstückiger gewebter Airbag ist, umfassend mindestens eine integral gewebte Naht (6, 24), die durch einen Bereich definiert ist, in dem Fäden (4, 5) der Webart der einen Schicht (2) mit Fäden (4, 5) des Gewebes der anderen Schicht (3) verwoben sind, wobei die Haltefäden (8) integral in die Webart der Schichten (2, 3) innerhalb der Verbindungsbereiche (9a, 9b) eingewebt sind und wobei die mindestens eine integral gewebte Naht (6, 24) die Biegenaht (24) einschließt.

## Revendications

1. Coussin de sécurité gonflable (1) conçu pour être gonflé par une source de gaz, le coussin de sécurité gonflable (1) étant formé de première et seconde couches (2, 3) de tissu agencées en superposition pour définir une chambre gonflable (7) entre les couches pour la réception du gaz de gonflage ; chaque couche de tissu (2, 3) ayant une structure comprenant au moins un fil, et les deux couches (2, 3) étant interconnectées par une pluralité de fils d'attache (8) s'étendant entre les couches (2, 3) à l'intérieur de la chambre gonflable (7), dans laquelle au moins certains de ces fils d'attache (8) sont impliqués dans la structure desdites couches (2, 3) dans un premier groupe (25) de régions de connexion comprenant une pluralité de premières régions de connexion (9a) dans lesquelles les fils d'attache (8) sont impliqués dans la structure de la première couche (2), et une pluralité de secondes régions de connexion (9b) dans lesquelles les fils d'attache (8) sont impliqués dans la structure de la seconde couche (3) ; et au moins certains desdits fils d'attache (8) sont impliqués dans la structure desdites couches (2, 3) au niveau d'un second groupe (26) de régions de connexion comprenant une pluralité de premières régions de connexion (9a) dans lesquelles les fils d'attache (8) sont impliqués dans la structure de la première couche (2), et une pluralité de secondes régions de connexion (9b) dans lesquelles les fils d'attache (8) sont impliqués dans la structure de la seconde couche (3) ; dans lequel, dans chacun desdits groupes (25, 26) de régions de connexion : i) chaque première région de connexion (9a) est plus large dans le sens de la longueur des fils d'attache (8) que chacune desdites secondes régions de connexion (9b), et ii) lesdites secondes régions de connexion (9b) sont décalées par rapport auxdites premières régions de connexion (9a) de telle sorte que lesdites secondes régions de connexion (9b) ne s'opposent à aucune desdites premières régions de connexion (9a) à travers la chambre gonflable (7) ; et dans lequel lesdites première et seconde régions de connexion (9a, 9b) au sein de chaque groupe (25, 26) sont allongées et s'étendent généralement parallèlement l'une à l'autre et à travers les couches respectives (2, 3) du coussin de sécurité gonflable, les régions de connexion (9a, 9b) du premier groupe (25) n'étant pas parallèles aux régions de connexion (9a) du second groupe (26) ; les fils d'attache (8) servant à induire une première courbure au coussin de sécurité gonflable (1) par le biais du premier groupe (25) de régions de connexion (9a, 9b), et à induire une seconde courbure au coussin de sécurité gonflable (1) par le biais du second groupe (26) de régions de connexion (9a, 9b), lorsque la chambre gonflable (7) est gonflée.

2. Coussin de sécurité gonflable (1) selon la revendication 1, dans lequel chaque région de connexion (9a, 9b) s'étend le long d'un axe d'extension respectif (27) ; au moins certaines des régions de connexion (9a, 9b) de l'un desdits groupes (26) s'étendant à travers les axes d'extension (27) le long desquels s'étendent au moins certaines des régions de connexion (9a, 9b) de l'autre groupe (25).

3. Coussin de sécurité gonflable (1) selon la revendication 1 ou la revendication 2, dans lequel les régions de connexion (9a, 9b) du premier groupe (25) s'étendent à un angle oblique par rapport à l'extension des régions de connexion (9a, 9b) du second groupe (26).

4. Coussin de sécurité gonflable (1) selon l'une quelconque revendication précédente, dans lequel au moins l'un desdits groupes (26) de régions de connexion comprend : un premier ensemble (28) desdites première et seconde régions de connexion (9a, 9b), et un second ensemble (29) de premières et secondes régions de connexion (9a, 9b) ; chaque première région de connexion (9a) dudit premier ensemble (28) s'étendant de manière collinéenne par rapport à une première région de connexion respective (9a) dudit second ensemble (29), et chaque seconde région de connexion (9b) du premier ensemble (28) s'étendant de manière collinéenne par rapport à une seconde connexion respective (9b) du second ensemble (29) ; et dans lequel les premier et second ensembles (28, 29) de régions de connexion (9a, 9b) sont séparés l'un de l'autre par une couture de flexion (24) interconnectant les première et seconde couches de tissu (2, 3).

5. Coussin de sécurité gonflable (1) selon la revendication 4, dans lequel ladite couture de flexion (24) est sensiblement linéaire et s'étend généralement de manière orthogonale à l'extension desdites régions de connexion (9a, 9b) des premier et second ensembles (28, 29).

6. Coussin de sécurité gonflable (1) selon l'une quelconque revendication précédente, dans lequel, dans chacun desdits groupes (25, 26) de régions de connexion (9a, 9b) : lesdites premières régions de connexion (9a) sont espacées les unes des autres à travers une partie de ladite première couche (2) ; et lesdites secondes régions de connexion (9b) sont espacées les unes des autres sur une partie opposée de ladite seconde couche (3).

7. Coussin de sécurité gonflable (1) selon l'une quelconque revendication précédente, dans lequel, à l'intérieur de chaque groupe (25, 26) de régions de connexion (9a, 9b) : aucun fil d'attache (8) ne s'étend entre l'une quelconque desdites secondes régions de connexion (9b) sans être impliqué dans la structure de la première couche (2) entre lesdites secondes régions de connexion (9b).

8. Coussin de sécurité gonflable (1) selon l'une quelconque revendication précédente, dans lequel, dans au moins un desdits groupes (25, 26) de régions de connexion (9a, 9b) : au moins une desdites premières régions de connexion (9a) comprend une pluralité de sous-régions de connexion (9a') espacées à l'intérieur desquelles lesdits fils d'attache (8) sont impliqués dans la structure de ladite première couche (2), et dans lequel lesdits fils d'attache (8) s'étendent entre lesdites sous-régions de connexion (9a') sans être impliqués dans la structure de la première couche (2) ou de la seconde couche (3) entre lesdites sous-régions de connexion (9a').

9. Coussin de sécurité gonflable (1) selon l'une quelconque revendication précédente, dans lequel chacune desdites couches (2, 3) de tissu est tissée et présente une armure comprenant une pluralité de fils de chaîne parallèles (4) et une pluralité de fils de trame parallèles (5).

10. Coussin de sécurité gonflable (1) selon la revendication 9, dans lequel les fils d'attache (8) sont entrelacés avec les fils (4) de la première couche (2) dans chacune desdites premières régions de connexion (9a), et les fils d'attache (8) sont entrelacés avec les fils (4) de la seconde couche (3) dans chacune desdites secondes régions de connexion (9b).

11. Coussin de sécurité gonflable (1) selon la revendication 9, dépendant de la revendication 8, dans lequel les fils d'attache (8) sont entrelacés avec les fils (4) de la première couche (2) uniquement dans lesdites sous-régions de connexion (9a') et sont entrelacés avec les fils (4) de la seconde couche (3) uniquement dans lesdites secondes régions de connexion (9b).

12. Coussin de sécurité gonflable (1) selon l'une quelconque des revendications 9 à 11, dans lequel les régions de connexion (9a, 9b) des premier et second groupes (25, 26) s'étendent à des angles obliques par rapport aux fils de chaîne (4) et aux fils de trame (5) des deux couches de tissu (2, 3).

13. Coussin de sécurité gonflable (1) selon l'une quelconque des revendications 9 à 12, dans lequel lesdits fils d'attache (8) s'étendent généralement parallèlement les uns aux autres et généralement parallèlement auxdits fils de trame (5) des couches de tissu (2, 3).

14. Coussin de sécurité gonflable (1) selon l'une quelconque des revendications 9 à 13, dans lequel le coussin de sécurité gonflable (1) est un coussin de sécurité gonflable tissé d'une seule pièce comprenant au moins une couture intégralement tissée (6) définie par une région dans laquelle les fils (4, 5) de l'armure de l'une desdites couches (2) sont entrelacés avec les fils (4, 5) de l'armure de l'autre dite couche (3), et dans lequel lesdits fils d'attache (8) sont intégralement tissés dans l'armure desdites couches (2, 3) à l'intérieur desdites régions de connexion (9a, 9b).

15. Coussin de sécurité gonflable (1) selon la revendication 4 ou la revendication 5, dans lequel le coussin de sécurité gonflable (1) est un coussin de sécurité gonflable tissé d'une seule pièce comprenant au moins une couture intégralement tissée (6, 24) définie par une région dans laquelle les fils (4, 5) de l'armure d'une desdites couches (2) sont entrelacés avec les fils (4, 5) de l'armure de l'autre dite couche (3), lesdits fils d'attache (8) étant intégralement tissés dans l'armure desdites couches (2, 3) à l'intérieur desdites régions de connexion (9a, 9b), et dans lequel ladite au moins une couture intégralement tissée (6, 24) comprend ladite couture de flexion (24).
